# EUROPEAN PATENT APPLICATION

(11) **EP 1 998 497 A1**
(43) Date of publication of application: **03.12.2008**
(21) Application number: 07010807.1
(22) Date of filing: 31.05.2007
(51) Int. Cl.: H04L 12/24

(54) **Method for managing a management relationship in a network management system and enhanced element management system therefore**

(71) Applicant: Nokia Siemens Networks Oy, 02610 Espoo (FI)
(72) Inventor: Hirsch, Lucian, 81373 München (DE)
(74) Representative: Schober, Ralf Stefan

(57) **Abstract**

The present invention relates to a method for managing a management relationship in a network management system as well as to an enhanced element management system for providing management functionality in a network. It is an important aspect of the invention that the enhanced element management system takes over the responsibility for the network management from the network management system, when the network management system fails.

## Description

The present invention relates to a method for managing a management relationship in a network management system and an enhanced element management system for providing management functionality in a network.

The TMN principles (TMN = Telecommunication Management Network) define a plurality of layers for the management of a telecommunication network, wherein each layer has two functions: A manager function in the managing system for the next lower layer (for the case that such a lower layer is present) and an agent function in the managed system for the next higher layer (in case that such a higher layer is present).

In general, for the operative management of a telecommunication network two management layers are of importance: The first layer is the network management (NM) layer, whose functionality is provided by a (super-regional or national) network management system (NMS), also called network manager. The second layer is the network element management (EM) layer, whose functionality is provided by regional element managers, also called element management systems (EMS). These EMSs are in general furnished by the same manufacturer that provides the network elements (NE) that are to be managed by the EMS. The EMS adopts the role of the manager for the network elements of the next lower layer and adopts the role of the agent for the superordinate NMS.

To accomplish an integrated network management at a unified NMS for potentially manufacturer-specific network regions, the interface between the NMS and the regional EMSs (also called OMC = Operation and Maintenance Centre) must be manufacturer-independent.

Very often, the manager/agent-communication is carried out via a management interface that is characterized in an object-oriented environment by a communication protocol (such as Common Object Request Broker Architecture (CORBA), Common Management Information Protocol (CMIP), or Simple Network Management Protocol (SNMP)) and by an object model (also called Network Resource Model (NRM)). Such an interface exists for example between the network element management layer and the network element layer. The southbound interface of the EMS is called, for example, EM-NE or EMS-RNC (RNC = Radio Network Controller) in a UMTS network (UMTS = Universal Mobile Telecommunication System). Such an interface also exists between the network management layer and the network element management layer, wherein the northbound interface of the EMS is called NM-EM, also Itf-N, for example NMS-EMS.

A manager launches requests for the surveillance and control of the network that are executed by the agents that return corresponding responses to the requests. An agent recognizes relevant network events, such as alarms, and generates so-called notifications that are transmitted as event reports to the manager in order to enable an efficient network management.

An EMS can control diverse network elements via network-element-specific access modules (AM). While the object models at the EM-NE interface are manufacturer-specific, the NM-EM interface is standardized with regard to the functionality and object modeling to allow for a unified network management solution. For example, the 3GPP SA WG5 standardization group specified the management functions and the object models at the NM-EM interface for mobile networks on the basis of so-called integration reference points (IRPs).

The interfaces of the EMS to the super-regional NMS are implemented by so-called Itf-N agents (also called IRP agents). These Itf-N agents, for example, transform the notifications that are generated in the network with the help of so-called mapping tables according to the standardized object model of the NM-EM interface and forward these mapped notifications to the NMS.

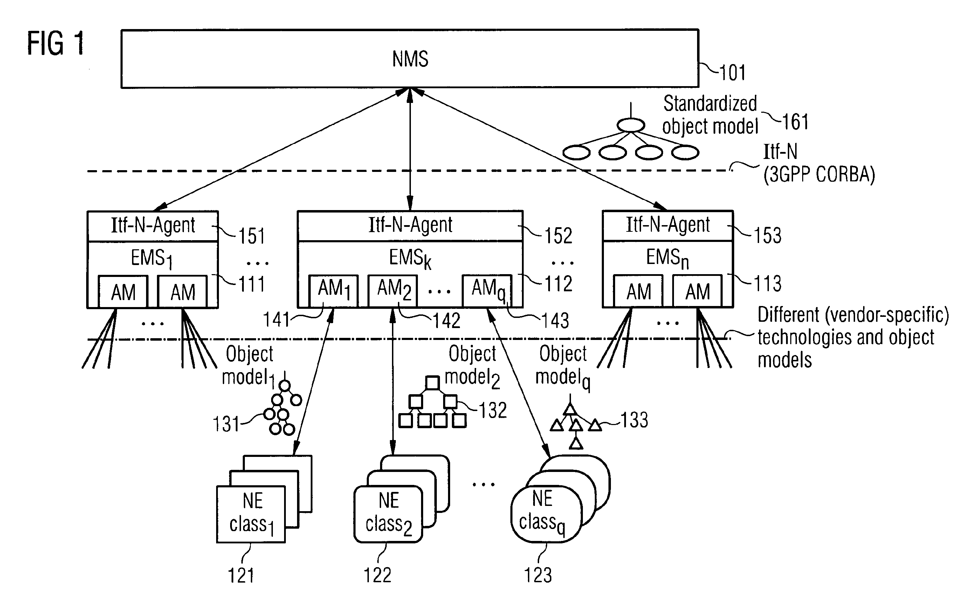

Fig. 1 further illustrates the above outlined network management architecture. An EMS 111, 112, 113 manages a plurality of network elements that may be provided by various vendors and may be therefore heterogeneous with regard to the employed technologies and object models. For illustrational purposes, three classes of network elements are depicted (NE class 1 (121), NE class 2 (122), and NE class q (123)). The network elements of the NE class 1 are managed using object model 1 (131). The network elements of the NE class 2 need to be managed via a different object model 2 (132) and the network elements of the NE class q are managed using the object model q (133). Since the object models 131, 132, 133 are heterogeneous, the EMS 112 needs various access modules (AM 1 (141), AM 2 (142), and AM q (143)) to communicate with the heterogeneous network elements.

To communicate with the NMS 101, the EMSs 111, 112, 113 possess Itf-N agents 151, 152, 153 that communicate with the NMS via a standardized object model 161, which may be, for example, 3GPP CORBA.

In such a network management architecture, the problem may occur that the NMS 101 fails such that temporarily there is no management functionality provided on the network management layer.

It is an object of the present invention to improve the reliability of a management functionality of a communication network.

This object is accomplished by the subject-matter of the independent claims. Preferred embodiments are specified by the dependent claims.

The present invention comprises a method for managing a management relationship in a network management system. The network management system may comprise at least one element management system for managing at least one network element of a communication network and a network management system for managing the element management systems.

According to the present invention, the method may comprise the steps of providing at least one enhanced element management system having a functionality of an element management system and a functionality of a network management system, recognizing a malfunction of the network management system on the enhanced element management system, sending request data from the enhanced element management system to the element management systems that are managed by the network management system, the request data indicating that the enhanced element management system adopts the role of the network management system, and receiving management data from said element management systems on the enhanced element management system.

This method has the advantage that the enhanced element management system is able not only to provide the functionality of an element management system, but also a functionality of a network management system. This means that the enhanced element management system may temporarily take over the role of the network management system in the case that it recognizes a malfunction of the network management system.

Enhanced in the sense of this patent specification means that the enhanced element management system not only possesses the functionality of an element management system, but also possesses at least a part of the functionality of the network management system.

Preferably, each element management system comprises a northbound interface for communicating with the network management system and at least one southbound interface for communicating with the at least one network element.

In a preferred embodiment, the enhanced element management system comprises a southbound interface for communicating with the northbound interface of the element management systems. Via this southbound interface, the enhanced element management system may communicate with the northbound interfaces of the element management systems as if it were the network management system.

Preferably, the method according to the present invention comprises the step of configuring at the element management systems that the enhanced element management system has access rights on the element management systems corresponding to the access rights of the network management system on the element management systems.

This has the advantage that the enhanced element management system possesses the necessary access rights to adopt the role of the network management system in case the network management system fails.

Preferably, the method according to the present invention comprises the steps of requesting network configuration data from the element management systems that are to be managed by the enhanced element management system, receiving network configuration data from said element management systems on the enhanced element management system, and storing the received network configuration data in a management information base of the enhanced element management system. These steps have the advantage that the enhanced element management system receives an overview over the configuration of the network that it has to manage in case the network management system fails.

In a preferred embodiment, the method according to the present invention comprises the steps of requesting alarm list data from the element management systems that are to be managed by the enhanced element management system, receiving alarm list data from said element management systems on the enhanced element management system, and updating an alarm list of the enhanced element management system with the received alarm list data. In this way, the enhanced element management system possesses an up-to-date alarm list relating to all current alarms that are present in the network that the enhanced element management system manages in case the network management system fails.

Preferably, the method according to the present invention comprises the steps of requesting at least one subscription identifier from the element management systems that are to be managed by the enhanced element management system, receiving on the enhanced element management system from the element management systems subscription identifiers corresponding to subscriptions of the network management system at said element management systems, and requesting the subscription status at the element management systems using the received subscription identifiers. These steps have the advantage that the enhanced element management system receives information about all subscriptions that the network management system made at the element management systems.

In a preferred embodiment, the method according to the present invention further comprises the steps of receiving on the enhanced element management system from the element management systems subscription status data relating to parameters of subscriptions of the network management system at said element management systems, and subscribing the enhanced element management system at the element management systems using said subscription status data.

In this way, the enhanced element management system may subscribe substantially for the same information that the network management system subscribed for. As a consequence, the enhanced element management system may receive substantially the same information as the network management system and may react in the same way in which the network management system would have reacted.

In a preferred embodiment, the method according to the present invention comprises the steps of recognizing correct functioning of the network management system, requesting network configuration data from the enhanced element management system by the network management system, receiving network configuration data from the enhanced element management system on the network management system, and storing the received network configuration data in a management information base of the network management system.

Due to these steps, it can be recognized that the network management system is up and running again. In this case, the network management system takes over its role again. For this purpose, it needs network configuration data to acquire data about the current situation of the network. With the requested and received network configuration data it updates its own management information base such that it may take over the network management responsibility again.

Preferably, the method according to the present invention further comprises the steps of requesting alarm list data from the enhanced element management system by the network management system, receiving alarm list data from the enhanced element management system on the network management system, and updating an alarm list of the network management system with the received alarm list data.

With these steps, the now again properly functioning network management system updates its own alarm list with the alarm list data of the enhanced element management system that temporarily took over the role of the network management system.

Preferably, the method comprises the steps of subscribing the network management system at the element management systems that are to be managed by the network management system to receive management data of the element management systems on the network management system.

In this way, the network management system informs the element management systems that further on it will take over responsibility for the network management.

Preferably, the method comprises the step of unsubscribing the enhanced element management system at the element management systems that are to be managed by the network management system.

Due to this step, the enhanced element management system may unsubscribe at the element management systems, when the network management system resumes responsibility for the network management again.

The present invention further comprises an enhanced element management system for providing management functionality in a network. As already stated above, enhanced in the sense of this patent specification means that the enhanced element management system not only possesses the functionality of an element management system, but also possesses at least a part of the functionality of the network management system. Preferably, the enhanced element management system is able to communicate with other element management systems for managing at least one network element of a communication network and with a network management system for managing the element management systems.

According to the present invention, the enhanced element management system may comprise means for providing a functionality of an element management system, means for providing a functionality of a network management system, means for recognizing a malfunction of the network management system, means for sending request data from the enhanced element management system to the element management systems that are managed by the network management system, the request data indicating that the enhanced element management system adopts the role of the network management system, and means for receiving management data from said element management systems on the enhanced element management system.

These means allow the enhanced element management system to take over the role of the network management system, when the network management system fails. For this purpose, the means for providing a functionality of a network management system does not need to provide the complete functionality of the network management system, but only some important aspects of the functionality of the network management system.

Preferably, the enhanced element management system comprises a northbound interface for communicating with the network management system and at least one southbound interface for communicating with at least one network element. In a preferred embodiment, the enhanced element management system comprises a southbound interface for communicating with other element management systems. This southbound interface allows the enhanced element management system to communicate with the other element management systems as if the enhanced element management system were the network management system.

Preferably, the enhanced element management system comprises means for requesting network configuration data from the element management systems that are to be managed by the enhanced element management system, means for receiving network configuration data from said element management systems on the enhanced element management system, and means for storing the received network configuration data in a management information base of the enhanced element management system. These means allow the enhanced element management system to update its management information base with up-to-date information about the current network configuration.

Preferably, the enhanced element management system comprises means for requesting alarm list data from the element management systems that are to be managed by the enhanced element management system, means for receiving alarm list data from said element management systems on the enhanced element management system, and means for updating an alarm list of the enhanced element management system with the received alarm list data. These means allow the enhanced element management system to request and receive alarm list data from the element management systems that it has to manage, such that it gathers a complete overview of all alarms that are present in the part of the network that it manages.

In a preferred embodiment, the enhanced element management system comprises means for requesting at least one subscription identifier from the element management systems that are to be managed by the enhanced element management system, means for receiving on the enhanced element management system from the element management systems subscription identifiers corresponding to subscriptions of the network management system at said element management systems, and means for requesting the subscription status at the element management systems using the received subscription identifiers. In this way, the enhanced element management system is enabled to find out which subscriptions the network management system made at the element management systems that the enhanced element management system will manage.

Preferably, the enhanced element management system comprises means for receiving on the enhanced element management system from the element management systems subscription status data relating to parameters of subscriptions of the network management system at said element management systems, and means for subscribing the enhanced element management system at the element management systems using said subscription status data. Due to these means, the enhanced element management system is able to subscribe for substantially the same information that the network management system subscribed for at the element management systems.

In a preferred embodiment, the enhanced element management system comprises means for receiving a request for network configuration data from the network management system, and means for sending network configuration data from the enhanced element management system to the network management system. These means enable the enhanced element management system to inform the network management system about the up-to-date network configuration, when the network management system is properly functioning again.

Preferably, the enhanced element management system comprises means for receiving a request for alarm list data from the network management system, and means for sending alarm list data from the enhanced element management system to the network management system. These means enable the enhanced element management system to inform the network management system about the current alarms in the network, when the network management system is properly functioning again.

Preferably, the enhanced element management system comprises means for unsubscribing the enhanced element management system at the element management systems that are to be managed by the network management system. Due to this means, the enhanced element management system may unsubscribe at the element management system, when the network management system takes over the responsibility for the network management again.

The above described method and/or the above described enhanced element management system may be implemented in software. Thus, the present invention also comprises a computer program product comprising a computer readable medium and a computer program recorded therein in form of a series of state elements corresponding to instructions which are adapted to be processed by a data processing means of a data processing apparatus such that the method according to the present invention is performed or an enhanced element management system according to the present invention is formed on the data processing means.

Furthermore, the present invention comprises a system for managing a communication network, the system comprising at least one network element for providing a communication functionality of the communication network, at least one element management system for managing at least one network element, at least one enhanced element management system according to the present invention, and a network management system for managing the element management systems.

In the following, preferred embodiments and further details of the present invention will be described with reference to the figures.
Fig. 1 shows a network management architecture according to the prior art.
Fig. 2 illustrates one embodiment of a network management architecture that results, when the enhanced element management system temporarily adopts the role of the network management system.
Fig. 3 shows one embodiment of the method according to the present invention.
Fig. 4 shows one embodiment of the part of the method that is performed, when the network management system is properly functioning again.
Fig. 5 illustrates how one embodiment of the enhanced element management system deals with network configuration data, when it adopts the role of the network management system.
Fig. 6 illustrates how one embodiment of the enhanced element management system deals with alarm list data during the phase when it adopts the role of the network management system.
Fig. 7 illustrates one example of how the network management system synchronizes its management information base with the enhanced element management system, when the network management system is properly working again.
Fig. 8 illustrates one example of how the network management system synchronizes its alarm list with the enhanced element management system, when the network management system is properly functioning again.
Fig.9 shows one embodiment of an enhanced element management system according to the present invention.

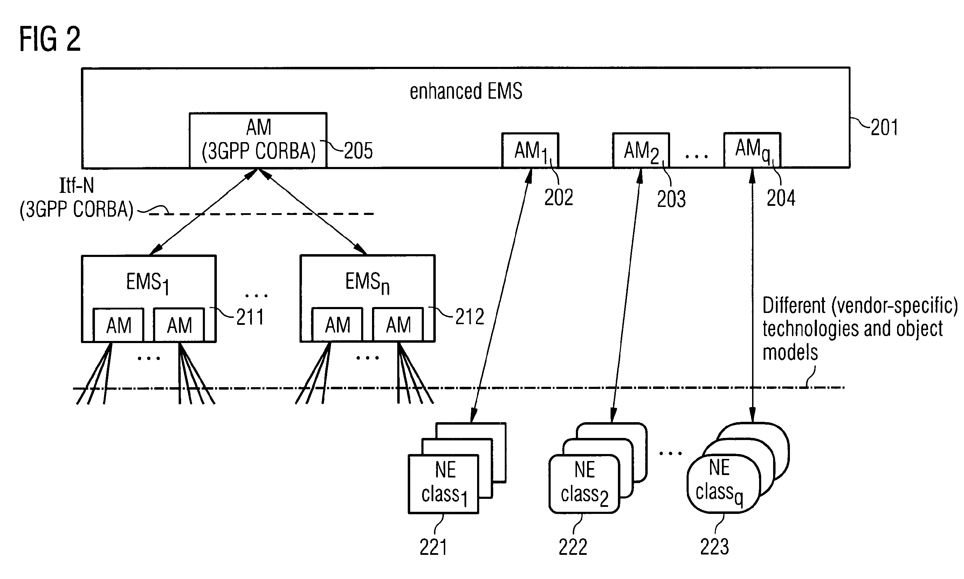

Fig. 2 shows one embodiment of a network management architecture that may result according to one embodiment of the present invention, when the enhanced EMS adopts the role of the NMS. The invention is illustrated by using an example of a mobile network with a 3GPP conforming, CORBA-based interface between the NMS and the regional EMSs. The principle of the illustrated embodiment is applicable also for other types of telecommunication networks and other interfaces as well as protocols.

When the NMS 101 fails, the enhanced element management system 201 takes over the role of the NMS 101. Besides the vendor-specific interfaces (access modules AM₁ to AMq) 202, 203, 204, the enhanced EMS 201 possesses a 3GPP conforming, CORBA-based management interface 205 as a southbound interface. Moreover, the enhanced element management system possesses enough resources, such as CPU and storage capacity, to take over the additional network management task for a limited time period.

Via the interface 205, the enhanced element management system manages the element management systems 211, 212. This is possible, because the enhanced element management system possesses the same access rights as the NMS.

During normal operation, i. e. when the NMS is properly functioning, the enhanced EMS is only responsible for controlling its own network region comprising network elements corresponding to the NE class 1 - NE class q 221, 222, 223. Preferably, the enhanced element management system is located near the super-regional NMS, such that the NMS operator (a human being) is able to change its working place from the NMS to the enhanced EMS without effort, when the NMS fails.

To control the telecommunication network efficiently, the operators need especially real-time information about failures and autonomous changes of the network parameters (configuration management data (CM data)). During normal operation, the NMS subscribes with the operation "subscribe" according to the standard 3GPP TS 32.302 "Notification Integration Reference Point (IRP): Information Service (IS)" to the notifications of the subordinate EMSs using a unique manager reference identifier. The parameter time tick in the subscribe request to the enhanced element management system should have a smaller value than in the requests to other EMSs, such that the enhanced EMS will notice a failure of the NMS before the other EMSs.

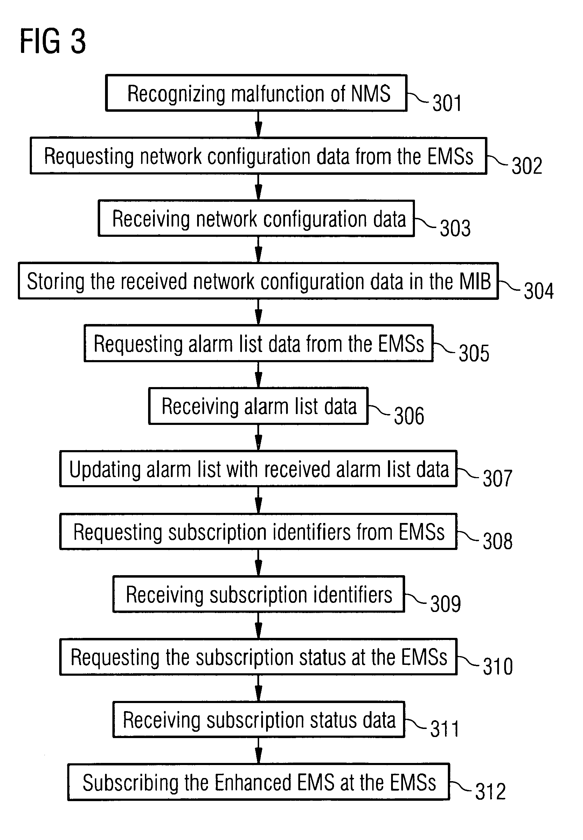

Fig. 3 shows one embodiment of the method according to the present invention. In step 301, the enhanced EMS recognizes a malfunction of the NMS by surveying its interface to the super-regional NMS.

In step 302, the enhanced EMS sends a getMoAttributes-request according to the standard 3GPP TS 32.602 "Basic CM Integration Reference Point (IRP): Information Service (IS)" to each other EMS to receive network configuration data in step 303 and to store the received network configuration data in the management information base in step 304.

In step 305, the enhanced EMS sends a getAlarmList-request according to the standard 3GPP TS 32.111-2 "Alarm Integration Reference Point (IRP): Information Service (IS)" to each other EMS to receive alarm list data in step 306 and to update the alarm list with the received alarm list data in step 307 in order to synchronize the alarm list of the enhanced EMS with the alarm situation in the network.

Using the well-known manager reference identification of the NMS, the enhanced EMS sends a getSubscriptionIds-request according to the standard 3GPP TS 32.302 to each other EMS in step 308. The response received from the EMSs in step 309 comprises the subscription IDs with which the meanwhile failed NMS subscribed to the desired notifications of the EMSs.

Using these subscription IDs, the enhanced EMS sends a getSubscriptionStatus-request according to the standard 3GPP TS 32.302 to each other EMS in step 310. The EMSs respond with subscription status data, i. e. parameter values of the respective NMS subscriptions in the past, such as type of desired notifications, e.g. alarms with selected severity level, attribute value change notification, etc.

These subscription status data allow the enhanced EMS to subscribe to the same notifications which the NMS subscribed to by sending dedicated subscribe requests to each EMS in step 312. The original NMS subscription will be automatically deleted by each EMS after the expiry of the next time tick (time-out).

Due to the described steps, the enhanced EMS receives alarms and configuration management related notifications from the other EMSs. To assure the unambiguousness of the network resources in the whole network and to avoid the additional processing of the according messages in the enhanced EMS, the parameter alarmId of the alarms and the parameter objectInstance of configuration related notifications should not only contain the FDN-value (FDN = Full Distinguished Name), but also the identity of the sending EMS. In the enhanced EMS, this information regarding modifications of the network configuration is directly inserted into the MIB (= Management Information Base) of the Itf-N agent and the information regarding alarm notifications is directly inserted in the alarm list of the enhanced EMS.

Moreover, the enhanced EMS receives configuration management related notifications from the controlled network elements. For the configuration management related notifications from the own network region, the information is first mapped, before the mapped information is stored in the MIB.

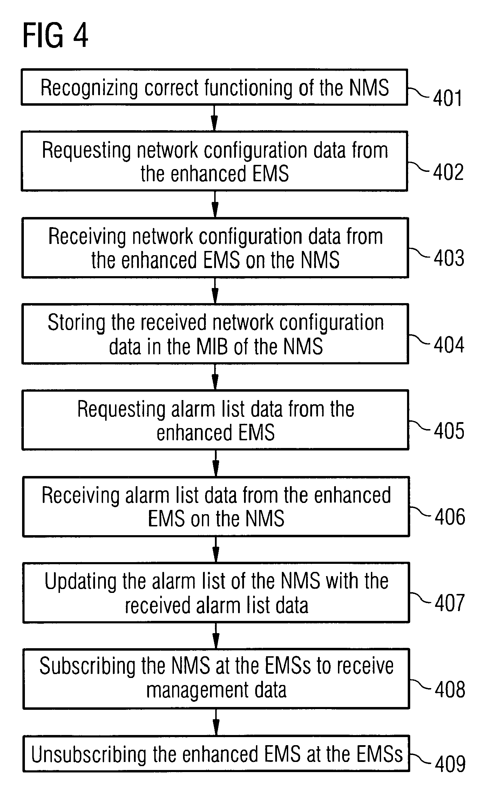

Fig. 4 shows one embodiment of the method that is executed, when the NMS is properly functioning again. When the NMS recognizes in step 401 that it is properly functioning again, it sends a getMoAttributes-request according to the standard 3GPP TS 32.602 to the enhanced EMS in step 402. In step 403, the NMS receives the network configuration data from the enhanced EMS and stores the received network configuration data in its MIB in step 404. In this way, the NMS synchronizes its own MIB with the MIB of the Itf-N agent of the enhanced EMS.

In step 405, the NMS sends a getAlarmList-request according to the standard 3GPP TS 32.111-2 to the enhanced EMS and receives the corresponding alarm list data from the enhanced EMS in step 406. Afterwards, the NMS updates its alarm list with the received alarm list data in step 407. No processing of alarms that stem from other network regions than the network region of the enhanced EMS is necessary, because the mapping of the alarms to the standardized Itf-N object model has already been carried out on the respective EMS. Only the alarms that stem from the network region of the enhanced EMS must be mapped, before they are transmitted to the NMS. To assure an unambiguousness of the alarms that are sent to the NMS, a parameter alarm ID should contain besides an EMS-specific parameter number an identifier of the sending EMS.

In step 408, the NMS subscribes using a subscribe request to the notifications of all EMSs. The enhanced EMS finishes the communication with the other EMSs using the standardized unsubscribe-request according to the standardized 3GPP TS 32.302 in step 409. With this unsubscription, the enhanced EMS no longer functions as a temporary network manager. The alarm IDs having an identifier indicating that these alarms do not belong to the network region of the enhanced EMS are deleted from the alarm list of the enhanced EMS. Analogously, all object instances are deleted from the Itf-N-MIB that contain parameter object instances that indicate that the object instances belong to a network region outside of the network region of the enhanced EMS.

The described method has the advantage that the network operators are enabled to cost-efficiently deal with temporary failures of the NMS. The method is applicable in homogenous (all EMSs are provided by one manufacturer), as well as in heterogeneous networks (the EMSs as well as the corresponding network elements are provided by various manufacturers). The precondition that must be met is that all EMSs support the same standardized northbound interface to the NMS. The method is applicable independently of the applied management protocol and for various types of telecommunication networks.

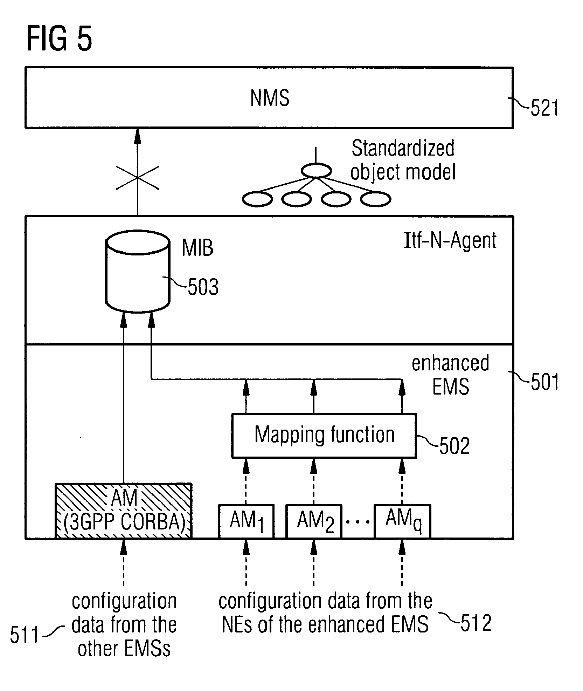

Fig. 5 illustrates how one embodiment of the enhanced EMS 501 deals with the configuration data from the other EMSs 511 and the configuration data from the network elements of the enhanced EMS 512, when the NMS 521 fails and thus the enhanced EMS 501 adopts the role of the NMS 521. As can be seen from Fig. 5, only the configuration data received from the network elements that are directly managed by the enhanced EMS 501 are mapped by a mapping function 502, before they are written into the MIB 503 of the Itf-N-agent of the enhanced EMS 501. The configuration data received from the other EMSs 511 has already been mapped by the other EMSs and may be therefore written directly to the MIB 503.

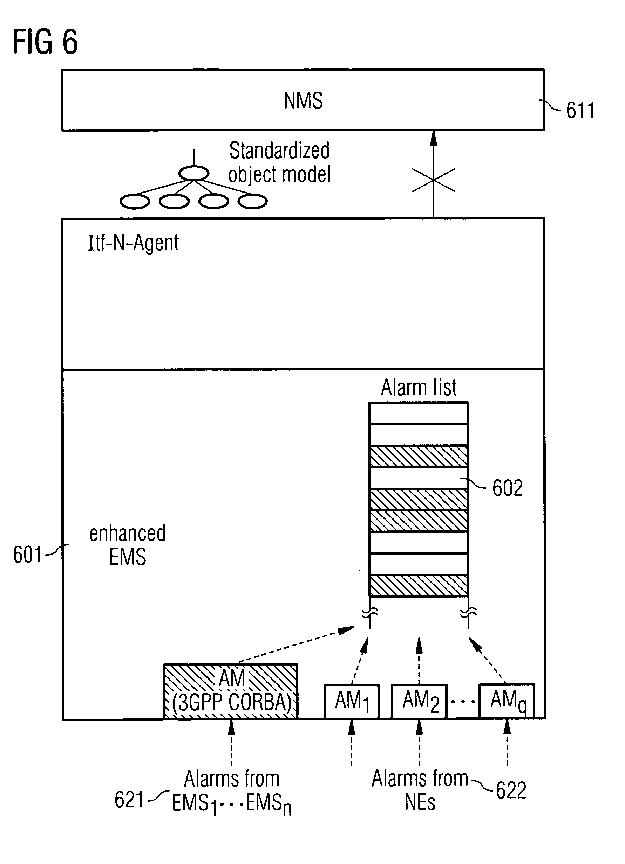

Fig. 6 illustrates how the alarms are stored in the enhanced EMS 601 according to one embodiment of the present invention, when the enhanced EMS 601 takes over the role of the NMS 611. As can be seen in Fig. 6, the alarms received from the other EMSs 621 have already been mapped by the other EMSs and are stored in the alarm list 602 in the mapped form. The alarms 622 that stem from the network elements that are directly managed by the enhanced EMS 601 are stored in the alarm list 602 in an unmapped form.

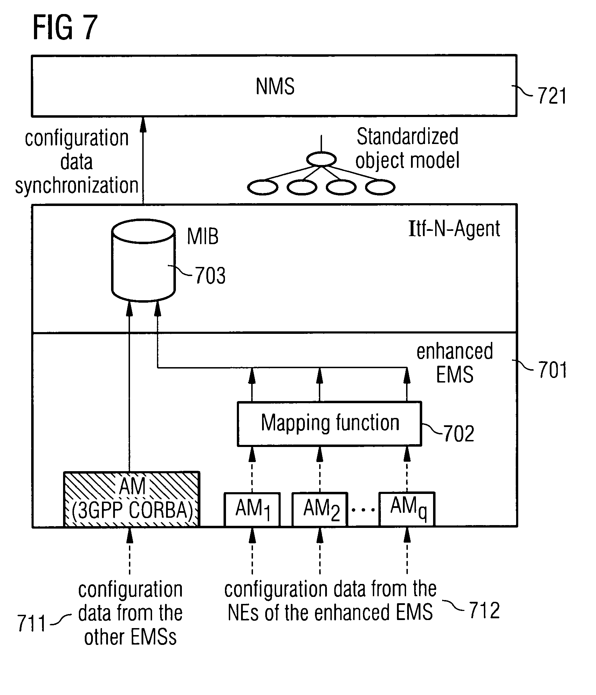

Fig. 7 illustrates the synchronization of configuration data between the enhanced EMS 701 and the NMS 721 according to one embodiment of the present invention, when the NMS 721 is properly functioning again. As was already discussed with reference to Fig. 5, the configuration data from the other EMSs 711 were already mapped by the other EMSs and the configuration data from the network elements of the enhanced EMS 712 were mapped by the mapping function 702, such that the MIB 703 only contains mapped configuration data. Therefore, the configuration data can be directly synchronized with the NMS 721 without performing a further mapping function.

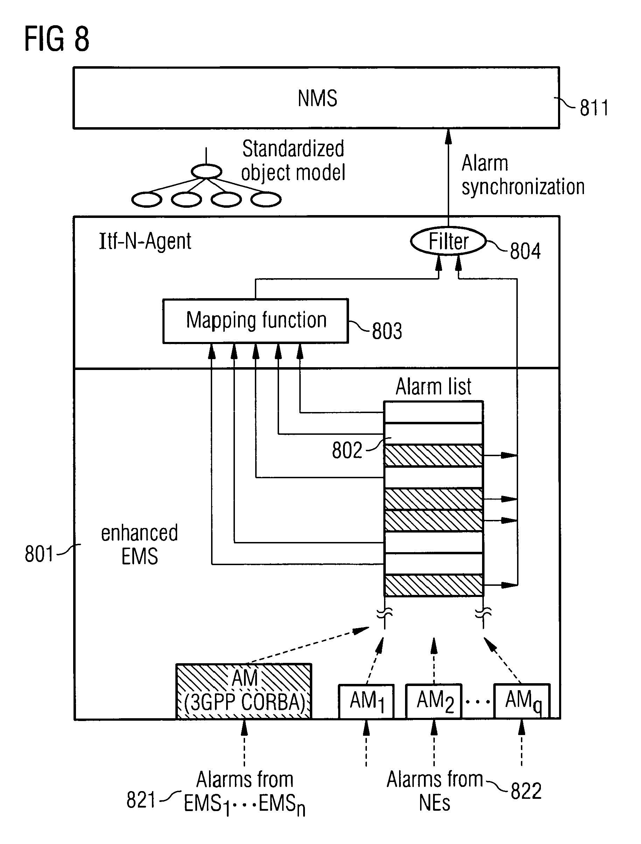

Fig. 8 illustrates how alarms of the alarm list 802 of the enhanced EMS 801 are synchronized with the NMS 811 according to one embodiment of the present invention, when the NMS 811 is properly functioning again. As was already discussed with reference to Fig. 6, the alarm list 802 contains already mapped alarms that were received from the other EMSs, as well as unmapped alarms that were received from the network elements of the enhanced EMS 801. Therefore, the unmapped alarms from the alarm list 802 are mapped by the mapping function 803 before they can be transmitted to the NMS 811. The alarms that are already stored in a mapped form in the alarm list 802 as well as the alarms that are mapped by the mapping function 803 are filtered by a filter 804, before they are transmitted to the NMS 811. The filter 804 may be configured to transmit to the NMS 811 only certain types of notifications that exceed, for example, a predetermined severity level.

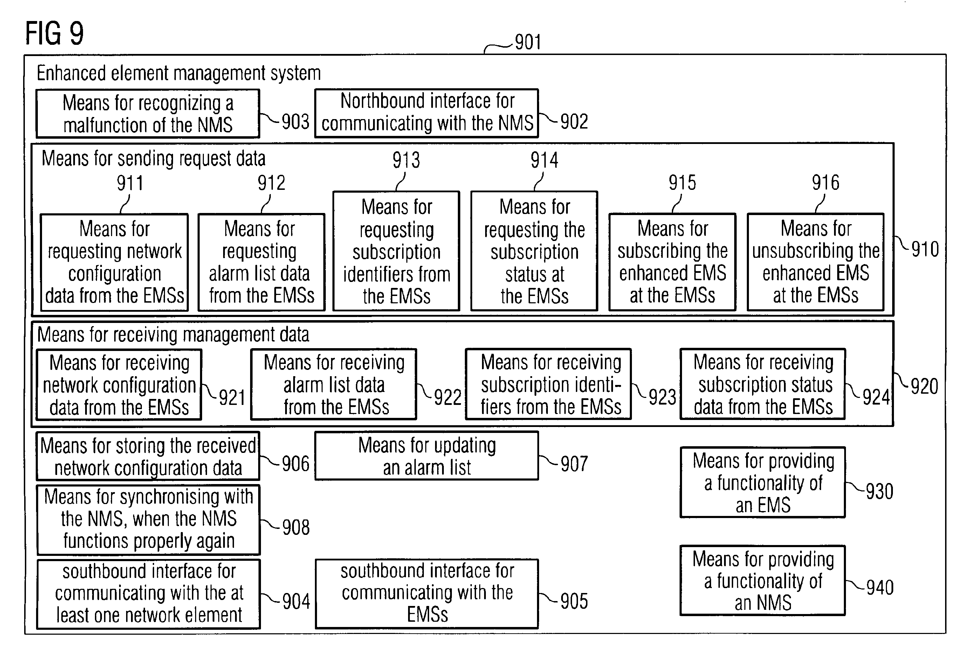

Fig. 9 shows one embodiment of an enhanced element management system 901 according to the present invention, the enhanced element management system 901 comprising means for providing a functionality of an element management system 930 and means for providing a functionality of a network management system 940.

The enhanced element management system 901 comprises a northbound interface for communicating with the NMS 902 and means for recognizing a malfunction of the NMS 903. The enhanced EMS 901 further comprises a southbound interface 904 for communicating with at least one network element and a southbound interface 905 for communicating with other EMSs.

Moreover, the shown embodiment of the enhanced EMS 901 comprises means for sending data 910 and means for receiving management data 920.

The means for sending data 910 comprise means for requesting network configuration data from the element management systems that are to be managed by the enhanced element management system 911, means for requesting alarm list data from the EMSs that are to be managed by the enhanced EMS 912, means for requesting at least one subscription identifier from the EMSs that are to be managed by the enhanced EMS 913, means for requesting the subscription status at the EMSs using the received subscription identifiers 914, means for subscribing the enhanced EMS at the EMSs using the subscription status data 915, and means for unsubscribing the enhanced EMS at the EMSs that are to be managed by the NMS 916.

The means for receiving management data 920 comprise means for receiving network configuration data from the EMSs on the enhanced EMS 921, means for receiving alarm list data from the EMSs on the enhanced EMS 922, means for receiving on the enhanced EMS from the EMSs subscription identifiers corresponding to subscriptions of the network management system at the EMSs 923, and means for receiving on the enhanced EMS from the EMSs subscription status data relating to parameters of subscriptions of the network management system at the EMSs 924.

Furthermore, the enhanced EMS 901 comprises means for storing the received network configuration data in a management information base of the enhanced EMS 906, means for updating an alarm list of the enhanced EMS with the received alarm list data 907, and means for synchronizing with the NMS, when the NMS functions properly again 908. The means for synchronizing with the NMS 908 preferably comprises means for receiving a request for network configuration data from the NMS and means for sending network configuration data from the enhanced EMS to the NMS as well as means for receiving a request for alarm list data from the NMS and means for sending alarm list data from the enhanced EMS to the NMS.

The specifications and drawings are to be regarded in an illustrative rather than a restrictive sense. It is evident, that various modifications and changes may be made thereto, without departing from the scope of the invention as set forth in the claims. It is possible to combine the features described in the embodiments in a modified way for providing additional embodiments that are optimized for a certain usage scenario. As far as such modifications are readily apparent for a person skilled in the art, these modifications shall be regarded as implicitly disclosed by the above described embodiments.

## Claims

1. Method for managing a management relationship in a network management system, the network management system comprising
- at least one element management system (201, 211, 212) for managing at least one network element of a communication network and
- a network management system (521; 611; 721; 811) for managing the element management systems,
the method comprising the steps of:
- providing at least one enhanced element management system (201; 501; 601; 701; 801; 901) having a functionality of an element management system and a functionality of a network management system,
- recognizing a malfunction of the network management system (301) on the enhanced element management system,
- sending request data (302, 305, 308, 310, 312) from the enhanced element management system to the element management systems that are managed by the network management system, the request data indicating that the enhanced element management system adopts the role of the network management system, and
- receiving management data (303, 306, 309, 311) from said element management systems on the enhanced element management system.

2. Method according to claim 1, **characterized in that** each element management system comprises a northbound interface for communicating with the network management system and at least one southbound interface for communicating with the at least one network element.

3. Method according to claim 1 or 2, **characterized in that** the enhanced element management system comprises a southbound interface for communicating with the northbound interface of the element management systems.

4. Method according to at least one of the preceding claims, **characterized by** the step of configuring at the element management systems that the enhanced element management system has access rights on the element management systems corresponding to the access rights of the network management system on the element management systems.

5. Method according to at least one of the preceding claims, **characterized by** the steps of
- requesting network configuration data from the element management systems that are to be managed by the enhanced element management system,
- receiving network configuration data from said element management systems on the enhanced element management system, and
- storing the received network configuration data in a management information base of the enhanced element management system.

6. Method according to at least one of the preceding claims, **characterized by** the steps of
- requesting alarm list data from the element management systems that are to be managed by the enhanced element management system,
- receiving alarm list data from said element management systems on the enhanced element management system, and
- updating an alarm list of the enhanced element management system with the received alarm list data.

7. Method according to at least one of the preceding claims, **characterized by** the steps of
- requesting at least one subscription identifier from the element management systems that are to be managed by the enhanced element management system,
- receiving on the enhanced element management system from the element management systems subscription identifiers corresponding to subscriptions of the network management system at said element management systems, and
- requesting the subscription status at the element management systems using the received subscription identifiers.

8. Method according to at least one of the preceding claims, **characterized by** the steps of
- receiving on the enhanced element management system from the element management systems subscription status data relating to parameters of subscriptions of the network management system at said element management systems,
- subscribing the enhanced element management system at the element management systems using said subscription status data.

9. Method according to at least one of the preceding claims, **characterized by** the steps of
- recognizing correct functioning of the network management system,
- requesting network configuration data from the enhanced element management system by the network management system,
- receiving network configuration data from the enhanced element management system on the network management system, and
- storing the received network configuration data in a management information base of the network management system.

10. Method according to claim 9, **characterized by** the steps of
- requesting alarm list data from the enhanced element management system by the network management system,
- receiving alarm list data from the enhanced element management system on the network management system, and
- updating an alarm list of the network management system with the received alarm list data.

11. Method according to claim 9 or 10, **characterized by** the step of
subscribing the network management system at the element management systems that are to be managed by the network management system to receive management data of the element management systems on the network management system.

12. Method according to at least one of the claims 9 to 11, **characterized by** the step of unsubscribing the enhanced element management system at the element management systems that are to be managed by the network management system.

13. Enhanced element management system (901) for providing management functionality in a network, the enhanced element management system being able to communicate with
- other element management systems (211, 212) for managing at least one network element of a communication network and
- a network management system (521; 611; 721; 811) for managing the element management systems,
the enhanced element management system comprising:
- means for providing a functionality of an element management system (930),
- means for providing a functionality of a network management system (940),
- means for recognizing a malfunction of the network management system (903),
- means for sending request data (910) from the enhanced element management system to the element management systems that are managed by the network management system, the request data indicating that the enhanced element management system adopts the role of the network management system, and
- means for receiving management data (920) from said element management systems on the enhanced element management system.

14. Enhanced element management system according to claim 13, **characterized by** a northbound interface for communicating with the network management system and at least one southbound interface for communicating with at least one network element.

15. Enhanced element management system according to claim 13 or 14, **characterized in that** the enhanced element management system comprises a southbound interface for communicating with other element management systems.

16. Enhanced element management system according to at least one of the claims 13 to 15, **characterized by**
- means for requesting network configuration data from the element management systems that are to be managed by the enhanced element management system,
- means for receiving network configuration data from said element management systems on the enhanced element management system, and
- means for storing the received network configuration data in a management information base of the enhanced element management system.

17. Enhanced element management system according to at least one of the claims 13 to 16, **characterized by**
- means for requesting alarm list data from the element management systems that are to be managed by the enhanced element management system,
- means for receiving alarm list data from said element management systems on the enhanced element management system, and
- means for updating an alarm list of the enhanced element management system with the received alarm list data.

18. Enhanced element management system according to at least one of the claims 13 to 17, **characterized by**
- means for requesting at least one subscription identifier from the element management systems that are to be managed by the enhanced element management system,
- means for receiving on the enhanced element management system from the element management systems subscription identifiers corresponding to subscriptions of the network management system at said element management systems, and
- means for requesting the subscription status at the element management systems using the received subscription identifiers.

19. Enhanced element management system according to at least one of the claims 13 to 18, **characterized by**
- means for receiving on the enhanced element management system from the element management systems subscription status data relating to parameters of subscriptions of the network management system at said element management systems, and
- means for subscribing the enhanced element management system at the element management systems using said subscription status data.

20. Enhanced element management system according to at least one of the claims 13 to 19, **characterized by**
- means for receiving a request for network configuration data from the network management system, and
- means for sending network configuration data from the enhanced element management system to the network management system.

21. Enhanced element management system according to at least one of the claims 13 to 20, **characterized by**
- means for receiving a request for alarm list data from the network management system, and
- means for sending alarm list data from the enhanced element management system to the network management system.

22. Enhanced element management system according to at least one of the claims 13 to 21, **characterized by** means for unsubscribing the enhanced element management system at the element management systems that are to be managed by the network management system.

23. A computer program product, the computer program product comprising a computer readable medium and a computer program recorded therein in form of a series of state elements corresponding to instructions which are adapted to be processed by a data processing means of a data processing apparatus such that a method according to at least one of the claims 1 to 12 is performed or an enhanced element management system according to at least one of the claims 13 to 22 is formed on the data processing means.

24. System for managing a communication network, the system comprising
- at least one network element for providing a communication functionality of the communication network,
- at least one element management system for managing at least one network element,
- at least one enhanced element management system according to at least one of the claims 13 to 22, and
- a network management system for managing the element management systems.
